# FASCICULE DE BREVET EUROPEEN

(11) **EP 2 367 025 B1**
(45) Date de publication et mention de la délivrance du brevet: **05.09.2012**
(21) Numéro de dépôt: 11156585.9
(22) Date de dépôt: 02.03.2011
(51) Int. Cl.: G01S 19/20

(54) **Procédé et système de vérification des performances en précision d'un système de navigation par satellite**
Prüfungsverfahren und -system der Präzisionsleistungen eines satellitengesteuerten Navigationssystems
Method and system for verifying the precision performance of a satellite navigation system

(30) Priorité: 12.03.2010 FR 1000996
(43) Date de publication de la demande: 21.09.2011
(73) Titulaire: Thales, 92200 Neuilly Sur Seine (FR)
(72) Inventeur: Levy, Jean-Christophe, 31130 Balma (FR)
(74) Mandataire: Esselin, Sophie

(56) Documents cités:
- US-B1- 6 847 893
- BORIANA VASSILEVA ET AL: "SBAS Vertical Protection Level Assessment in the Case of Error Reduction", MODERN COMPUTING, 2006. JVA '06. IEEE JOHN VINCENT ATANASOFF 2006 INTERNATIONAL SYMPOSIUM ON, IEEE, PI, 1 octobre 2006 (2006-10-01), pages 137-142, XP031035961, ISBN: 978-0-7695-2643-0
- WALTER AND P ENGE T: "Weighted RAIM for Precision Approach", PROCEEDINGS OF THE INSTITUTE OF NAVIGATION (ION) GPS, XX, XX, 1 septembre 1995 (1995-09-01), pages 1995-2004, XP002351332,
- ROTURIER B ET AL: "LE CONCEPT DE <<SBAS INTEGRITY>> NORMALISE PAR L'OACI - APPLICATION A EGNOS", NAVIGATION, PARIS, FR, vol. 49, no. 196, 1 octobre 2001 (2001-10-01), pages 65-77, XP008068617, ISSN: 0028-1530

## Description

L'invention concerne le domaine des systèmes de navigation par satellite et plus particulièrement un procédé de vérification de la performance de précision d'un tel système.

Actuellement, les services commerciaux exploitant les systèmes de navigation par satellite se développent considérablement. Les produits fonctionnant à partir de signaux de radiolocalisation se sont largement démocratisés dans le quotidien des foyers au sein des véhicules automobiles pour l'aide à la navigation routière dans un premier temps et ces derniers temps au sein des dispositifs de téléphonie mobile pour une multitude de services à la personne. Les évolutions des futurs systèmes de positionnement par satellite, par exemple le système européen GALILEO, promettent des performances bien supérieures aux systèmes actuels. Ainsi de nouveaux services qui ne pouvaient pas être envisagés faute de fiabilité et de précision de positionnement suffisante peuvent aujourd'hui voir le jour pour les entreprises, notamment les entreprises du transport routier et du transport aérien. Par exemple, pour le transport routier, on recherche à transformer les modèles économiques des services d'exploitation des sections routières payantes en offrant des offres personnalisées au client. Pour les compagnies de transport aérien, les performances accrues en fiabilité et précision de positionnement permettent d'intégrer au sein des aéronefs des dispositifs de navigation sur lesquels les pilotes pourront se reposer entièrement. Ces dispositifs permettront d'améliorer considérablement la sécurité du transport aérien. Cependant, pour les services dont dépend la sécurité des personnes, il est obligatoire de prouver la fiabilité des données transmises par le système de positionnement. C'est pourquoi les autorités soumettent les opérateurs des systèmes de navigation par satellite à des exigences de service garanti au client terminal.

Les systèmes de navigation par satellite se caractérisent par les données de performance d'intégrité, de précision et de couverture. L'intégrité est une mesure de confiance en l'information fournie par le système de positionnement par satellite. Un outil bien connu pour déterminer l'intégrité d'un point fourni est le diagramme de Stanford. Le diagramme de Stanford est une matrice en deux dimensions dont le paramètre d'entrée sur l'axe horizontal est l'erreur de position observée en vertical ou horizontal et dont le paramètre d'entrée sur l'axe vertical est le niveau de protection en vertical ou horizontal calculé à partir de modèles statistiques. Ce diagramme permet de vérifier la proportion d'échantillons mesurés dont l'erreur de position observée est plus faible que le niveau de protection.

L'article de B. Vassileva et al. « SBAS Vertical Protection Level Assessment in the case of Error Reduction », Modem Computing, 2006. JVA '06. IEEE John Vincnet Atanasoff 2006 International Symposium On, IEEE, PI, 1 octobre 2006, pages 137-142, XP031035961, ISBN:978-0-7695-2643-0, présente un algorithme de filtrage d'erreurs de localisation d'un système de navigation par satellite basée sur l'étude des paramètres d'intégrité et la relation entre le rayon de protection (PL), l'erreur de position (PE) par rapport à des seuils d'alerte (AL).

La précision d'une position est définie par l'erreur de position estimée par rapport à la position réelle. La précision de la localisation dépend notamment de l'erreur de la distance estimée entre l'utilisateur et les satellites reçus ainsi que de la configuration de la géométrie des mesures. Il existe une valeur indicative des conditions de géométrie des mesures communément appelée DOP pour « Dilation of Precision » en langage anglo-saxon. Lorsque la valeur du DOP est élevée, cela indique que les satellites utilisés pour obtenir la position sont proches et donc que la géométrie est mauvaise et lorsque la valeur du DOP est faible cela indique que les satellites utilisés pour obtenir la position sont éloignés et donc que la géométrie est bonne.

Les organismes chargés des règlementations et des contrôles concernant l'aviation civile exigent des niveaux de performances rigoureux notamment en performance de précision pour les services critiques. Parmi ces services critiques exploitant les données de géo-localisation des systèmes de positionnement par satellite, le service LPV200 (« Localizer Performance with Vertical Guidance ») exige que le système de positionnement par satellite montre pendant au moins 95% du temps une erreur de localisation en vertical inférieure à 4 mètres et en horizontal inférieure à 16 mètres. De plus, ce service exige que la probabilité de fournir une erreur de localisation en vertical supérieur à 10 mètres soit inférieure à 10-7 en condition normale et que la probabilité de fournir une erreur de localisation supérieure à 15 mètres soit inférieure à 10-5 en condition dégradée. Ce service est associé à un niveau d'alerte en vertical à 35 mètres et en horizontal à 40 mètres.

Les niveaux de précision certifiés ont été obtenus par mesure d'échantillons dans des conditions de prélèvement connus, notamment en géométrie de mesure. Or, actuellement il n'existe pas d'outil de mesure de la précision permettant de certifier à l'utilisateur ces niveaux d'exigence car la performance de précision dépend également de la géométrie satellitaire et les données collectées ne prennent pas en compte tous les cas de géométrie satellitaire pour chaque utilisateur.

Une solution mise en oeuvre par l'opérateur de service du système de positionnement par satellite américain pour certifier un niveau de précision à chaque utilisateur et prenant en compte toutes les configurations de géométrie satellitaire a été de collecter des données sur une période de longue durée. Durant trois années des données satellitaires ont été collectées afin de pouvoir affirmer que tous les cas de géométrie satellitaire ont été observés. Cependant, cette méthode présente le désavantage de mobiliser des ressources importantes, et de plus ne garantit pas que tous les cas aient pu être observés.

L'objectif de l'invention est de fournir un outil de contrôle des performances en précision d'un système de positionnement par satellite afin de pouvoir vérifier que le système répond aux exigences imposées par les applications critiques pour chaque utilisateur quelles que soient les conditions d'observation des signaux de radiolocalisation.

Plus précisément, l'invention concerne un procédé de vérification de la performance de précision en localisation d'un système de navigation par satellite comprenant un segment spatial émettant des signaux de radiolocalisation vers un segment récepteur. Le procédé comporte les étapes suivantes :
- Une étape préalable de mesure de l'erreur estimée de localisation du récepteur du système pour une pluralité d'échantillons et de calcul du seuil d'erreur maximum de localisation, appelé rayon de protection, pouvant être garanti par le système pour les dits échantillons, l'erreur estimée et le rayon de protection étant définis dans une dimension d'un repère de position,
- Une étape de calcul d'une première proportion d'échantillons vérifiant les conditions suivantes :
   i. le rayon de protection est inférieur à un seuil d'alerte,
   ii. le quotient du rayon de protection et de l'erreur estimée de localisation est supérieur à un quotient de sécurité, le quotient de sécurité étant le rapport entre le seuil d'alerte et un niveau d'exigence d'erreur estimée,
- Une étape de calcul d'une seconde proportion d'échantillons vérifiant les conditions suivantes :
   i. le rayon de protection est inférieur au seuil d'alerte,
   ii. le quotient du rayon de protection et de l'erreur estimée de localisation est inférieur au quotient de sécurité,
   iii. l'erreur estimée de localisation est inférieure au niveau d'exigence d'erreur estimée,
- Une étape de contrôle de comparaison de la première et de la seconde proportion d'échantillons avec une proportion d'exigence pour vérifier la performance en précision du système de navigation par satellite.

On entend par proportion d'échantillons un nombre d'échantillons au regard d'un ensemble d'échantillons observés.

Lorsque la première proportion d'échantillons est supérieure à une proportion d'exigence devant être garanti par un service de navigation à un utilisateur, on certifie à un utilisateur que le système de navigation respecte le niveau de service lié à au niveau d'exigence d'erreur estimée de localisation.

De préférence, il comporte également une étape de calcul d'une troisième proportion d'échantillons vérifiant les conditions suivantes :
i. Le rayon de protection est inférieur au seuil d'alerte,
ii. le quotient du rayon de protection et de l'erreur estimée de localisation est inférieur au quotient de sécurité,
iii. l'erreur estimée de localisation est supérieure au niveau d'exigence d'erreur estimée,

De préférence, il comporte également une étape de calcul d'une quatrième proportion d'échantillons vérifiant les conditions suivantes :
i. Le rayon de protection st supérieur au seuil d'alerte,
ii. L'erreur estimée de localisation est supérieure au niveau d'exigence d'erreur estimée,

De préférence, il comporte également une étape de calcul d'une cinquième proportion d'échantillons vérifiant les conditions suivantes :
i. Le rayon de protection est supérieur au seuil d'alerte,
ii. L'erreur estimée de localisation est inférieure au niveau d'exigence d'erreur estimée.

Avantageusement, les proportions d'échantillons sont calculées pour au moins deux niveaux d'exigence d'erreur estimée de localisation.

Avantageusement, les proportions d'échantillons sont calculées pour au moins deux seuils d'alerte.

L'invention concerne également tout système apte à mettre en oeuvre le procédé de vérification de la performance de précision en localisation d'un système de navigation par satellite selon l'une quelconque variantes précédentes.

Avantageusement, il comporte des moyens d'affichage pour représenter dans un diagramme des échantillons de localisation d'un récepteur d'un système de navigation par satellite, le dit diagramme représentant :
- Sur un premier axe, le quotient du rayon de protection et de l'erreur estimée de localisation défini dans une dimension d'un repère de position,
- Sur un second axe le rayon de protection,
- Une première droite représentant l'erreur estimée de localisation pour un niveau d'exigence fixe de l'erreur estimée de localisation,
- Une seconde droite représentant un seuil d'alerte du rayon de protection.

Avantageusement, les échantillons sont affichés dans le diagramme selon un code de représentation dépendant de la première et de la seconde proportion d'échantillons.

Le procédé de vérification permet de contrôler qu'un système d'aide à la navigation par satellite respecte les exigences attendues du système pour un service donné et cela, dans le cas où le relevé d'échantillons de données de localisation vérifie positivement le test, en étant certain que ces exigences sont respectées quelles que soient les conditions d'observations des signaux en géométrie satellitaire. Ainsi, l'utilisation d'un système mettant en oeuvre le procédé de vérification permet de mettre en place un outil de contrôle des performances en précision sans pour autant recourir à des ressources de calcul et de mesures phénoménales qui, de plus, ne permettraient pas de garantir toutes les configurations de géométrie satellitaire. Selon les résultats de test sur les échantillons de localisation d'un récepteur, il est possible d'affirmer que toutes les configurations de géométrie satellitaire sont respectées pour un seuil d'alerte de rayon de protection donné ce qui n'est pas le cas avec les solutions de l'état de la technique. Lorsque la majorité de la proportion d'échantillon est localisée dans une zone du diagramme où une dégradation de la géométrie satellitaire entraînerait l'erreur estimée de localisation au-delà du seuil d'alerte du rayon de protection alors il n'est pas utile de connaître les performances en précision car les mesures de localisation ne peuvent pas être exploitées pour un service critique limité par ce seuil d'alerte.

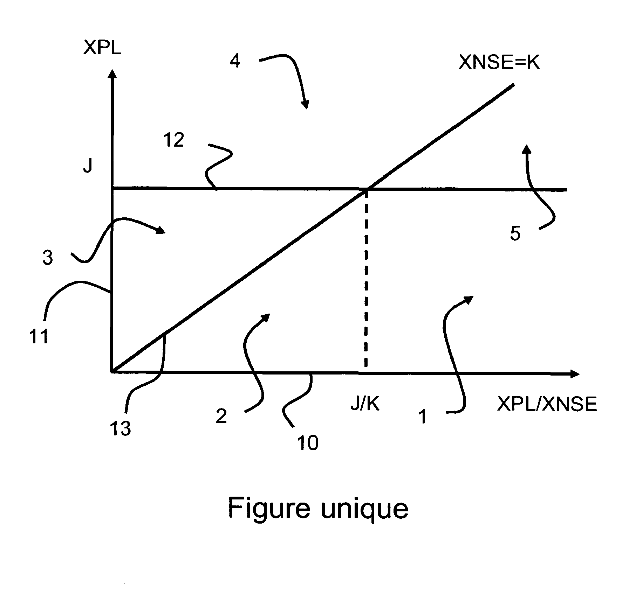

L'invention sera mieux comprise et d'autres avantages apparaîtront à la lecture de la description qui va suivre donnée à titre non limitatif et grâce à la figure suivante représentant un procédé de vérification sous la forme d'un diagramme permettant de contrôler que le système d'aide à la navigation par satellite respecte les exigences attendues de performance en précision.

Les fournisseurs de service exploitant les signaux de radiolocalisation des systèmes de navigation par satellite attendent de ces systèmes, d'une part des performances de plus en plus élevées et d'autre part une continuité de service et des capacités d'alertes permettant d'avertir un utilisateur du service lorsque que les performances ne répondent pas aux exigences attendues. Les solutions de vérification des performances existent actuellement pour le contrôle de l'intégrité d'un système de navigation par satellite quelle que soient les conditions d'observation des signaux pour un utilisateur, mais pour la vérifications des performances en précision, les outils existant ne peuvent pas le garantir dans toutes les conditions d'observation car chaque utilisateur exploite les signaux de radiolocalisation dans une configuration particulière dépendante de sa position, du moment d'observation et de l'état des satellites vus pour calculer sa position.

On rappelle brièvement le principe de localisation des systèmes de navigation par satellite. Dans un système de navigation par satellite, on utilise le temps mis par le signal de radiolocalisation émis par le satellite pour atteindre le récepteur à localiser afin de déterminer la distance, appelée pseudo-distance, entre ce satellite et ce récepteur, le signal contenant les données de position des satellites. A partir du traitement des signaux de radiolocalisation émis par plusieurs satellites vus par un utilisateur, ce dernier est capable de connaître sa position. Plus le nombre de satellite est important et plus la valeur du DOP est faible, alors meilleure est la précision de la position. La précision dépend notamment de la disposition des satellites, des paramètres de précision des horloges des satellites, des couches atmosphériques traversées et de la précision des corrections apportées.

Un service de niveau LPV200 exige les performances suivantes. Il est exigé que le système de navigation par satellite montre pendant au moins 95% du temps une erreur de localisation en vertical inférieure à 4 mètres et en horizontal inférieure à 16 mètres. De plus, ce service exige que la probabilité de fournir une erreur de localisation en vertical supérieur à 10 mètres soit inférieure à 10⁻⁷ en condition normale et que la probabilité de fournir une erreur de localisation supérieure à 15 mètres soit inférieure à 10⁻⁵ en condition dégradée. Le niveau de service LPV200 impose un seuil d'alerte en horizontal égal à 40 mètres et un seuil d'alerte en horizontal égal à 35 mètres.

L'invention propose un procédé de vérification des performances en précision permettant de garantir de telle performance en précision quelles que soient les conditions d'observation des signaux de radiolocalisation et permet également de configurer le procédé de sorte à vérifier tout autre niveau d'exigence en position, en localisation verticale ou horizontale. La figure unique représente graphiquement les calculs réalisés pour la vérification d'un lot d'échantillons en précision.

La figure représente un diagramme des échantillons de localisation d'un récepteur d'un système de navigation par satellite. Il représente sur un premier axe en horizontal 10 le quotient du seuil d'erreur maximum calculé (communément appelé le rayon de protection et terme que nous utiliserons par la suite par aisance de rédaction) et de l'erreur estimée de localisation, le quotient étant affiché en légende par la référence XPL/XNSE et étant défini dans une dimension d'un repère de position. Si on avait représenté le quotient du rayon de protection et de l'erreur estimée de localisation dans le repère vertical, alors on aurait représenté le quotient par la valeur VPL/VNSE et dans le plan horizontal par HPL/HNSE. Le rayon de protection XPL est obtenu par algorithme de calcul.

Le rayon de protection peut être obtenu selon diverses méthodes qui sont connues de l'homme du métier et le choix de la méthode n'apporte pas dans le cadre de l'invention une limitation de la portée du brevet.. Par exemple, le rayon de protection peut être déterminé à partir du niveau d'intégrité du système de navigation par satellite. Le rayon de protection représente les positions possibles dans un plan donné autour de la position réelle, plus exactement on garanti par calcul qu'une position calculée ne pourra pas être localisée au-delà de la position réelle additionnée du niveau de protection dans un plan donné.

L'erreur de localisation estimée XNSE est la différence entre la position réelle d'un récepteur, précisément connue par divers moyens, et la position estimée à partir du traitement des signaux de radiolocalisation émis par les satellites. Par exemple, la position d'une balise de réception de type GBAS (pour « ground-based augmentation system » en langage anglo-saxon) faisant partie d'un système de navigation par satellite est précisément connue. L'erreur estimée de localisation peut être obtenue selon diverses méthodes qui sont connues de l'homme du métier et le choix de la méthode n'apporte pas dans le cadre de l'invention une limitation de la portée du brevet.

Le niveau d'exigence de l'erreur de localisation K correspond à l'erreur de localisation que le système de navigation ne doit pas dépasser durant 95% du temps. A titre d'exemple indicatif, selon la criticité du service, le niveau d'exigence d'erreur peut être de 4 mètres pour 95% des échantillons, de 10 mètres pour une probabilité de 1.10⁻⁷ en condition normale et 15 mètres pour une probabilité de 1.10⁻⁵ en condition dégradée. Le niveau d'exigence peut varier selon la dimension du repère de position.

Le diagramme représente sur un second axe 11 en vertical le rayon de protection XPL. Le diagramme représente donc les échantillons de données de localisation positionnés dans le diagramme en horizontal en fonction du quotient du rayon de protection XPL et de l'erreur de localisation XPL et en vertical en fonction du rayon de protection. Le seuil d'alerte J est représenté graphiquement dans le diagramme par la droite 12 et le niveau d'exigence d'erreur estimée K est représenté par la droite 13. Le procédé de vérification de la performance en précision revendiqué consiste à calculer la proportion d'échantillons dans diverses catégories du diagramme définies dans les paragraphes suivants. On rappelle que la problématique de la mesure de la performance en précision dépend pour chaque utilisateur de la géométrie satellitaire, évaluée par la valeur DOP. L'intérêt de la représentation du diagramme est de pouvoir visualiser la variation de la DOP. Celle-ci se caractérise dans le diagramme par un mouvement vertical des échantillons. Lorsque la valeur de géométrie satellitaire DOP augmente, les échantillons de données se déplacent dans le diagramme verticalement vers le haut. En effet, si la valeur DOP augmente, le rayon de protection augmente mais le quotient XPL/XNSE reste invariant car ne dépend pas de la DOP, dans le domaine des positions le rayon de protection XPL étant égal à la multiplication DOP*intégrité et l'erreur de localisation étant égale à la multiplication DOP*erreur de pseudo-distance. Si la DOP diminue, le rayon de protection diminue et les échantillons se déplacent verticalement vers le bas.

Une première catégorie 1 calculée par le procédé de vérification comprend les échantillons respectant les deux conditions suivantes : le rayon de protection XPL est inférieur au seuil d'alerte J du service et le quotient XPL/XNSE du rayon de protection et de l'erreur estimée de localisation est supérieur au quotient de sécurité J/K, le quotient de sécurité étant le rapport entre le seuil d'alerte J et un niveau d'exigence d'erreur estimée K. Pour ces échantillons de données, on déduit que lorsque la DOP varie, les échantillons se déplacent verticalement vers le haut en cas de dégradation des conditions de géométrie et vers le bas en cas d'amélioration des conditions de géométrie. Par conséquent, les échantillons localisés dans cette catégorie 1 respectent l'exigence d'erreur de localisation quelle que soit la DOP, et si la DOP se dégrade de sorte que l'exigence d'erreur de localisation K n'est pas respectée, alors les échantillons dépassent obligatoirement le seuil d'alerte J exigé par le service. Cela signifie donc que soit le niveau d'exigence en erreur est respecté et alors on est certain qu'il est respecté quelle que soit la DOP, soit le niveau d'exigence n'est pas respecté et alors de toute façon le service de navigation n'est pas utilisable car le seuil d'alerte et dépassé. Donc siles échantillons calculés respectent les conditions de la catégorie 1 dans une condition observée de DOP alors la performance en précision est respectée quelle que soit la condition d'observation de DOP d'un utilisateur. Grâce au procédé on peut donc le déterminer sans avoir à mesurer toutes les conditions d'observation.

Une seconde catégorie 2 comprend les échantillons respectant les trois conditions suivantes : le rayon de protection est inférieur au seuil d'alerte J, le quotient XPL/XNSE du rayon de protection et de l'erreur estimée de localisation est inférieur au quotient de sécurité J/K et l'erreur estimée de localisation XNSE est inférieure au niveau d'exigence d'erreur estimée K. Pour ces échantillons de données, on en déduit que le niveau d'exigence en erreur de localisation est potentiellement respecté. Toutefois, si la valeur DOP augmente, l'erreur de localisation de certains échantillons peut devenir supérieure au niveau d'exigence de l'erreur estimée K alors que dans une condition de valeur DOP initiale l'erreur de localisation était inférieure. En calculant les échantillons dans la catégorie 2, on détermine si la performance en précision est respectée pour des conditions d'observation connue. Cependant, il n'est pas possible de le garantir pour tous les utilisateurs, notamment pour des utilisateurs qui se positionneraient dans des conditions d'observation dégradées par rapport à celles de mesure des échantillons.

Une troisième catégorie 3 comprend les échantillons respectant les trois conditions suivantes : le rayon de protection XPL est inférieur au seuil d'alerte J, le quotient XPL/XNSE du rayon de protection et de l'erreur estimée de localisation est inférieur au quotient de sécurité J/K et l'erreur estimée de localisation est supérieure au niveau d'exigence d'erreur estimée K. Pour ces échantillons de données, on en déduit que le niveau d'exigence en erreur de localisation n'est pas respecté. Toutefois, si la valeur DOP diminue, l'erreur de localisation des échantillons peut devenir inférieure au niveau d'exigence de l'erreur estimée K pour certains échantillons alors que dans une condition de valeur DOP initiale l'erreur de localisation était supérieure. En cas de dégradation de la géométrie satellitaire, les performances peuvent devenir telle que le rayon de protection ne respecte plus le seuil d'alerte. Le système de navigation ne doit alors plus être utilisé et l'utilisateur est averti.

Une quatrième catégorie 4 comprend les échantillons respectant les deux conditions suivantes : le rayon de protection XPL est supérieur au seuil d'alerte J et l'erreur estimée de localisation XNSE est supérieure au niveau d'exigence d'erreur estimée K. Pour ces échantillons de données, le rayon de protection XPL est supérieur au seuil d'alerte J. Si la proportion d'échantillon dans cette partie est élevée alors le système de navigation ne doit plus être utilisé car il présente une incertitude de localisation trop dangereuse pour le service utilisateur. Le système est alors considéré comme indisponible pour ces échantillons.

Une cinquième catégorie 5 comprend les échantillons respectant les deux conditions suivantes : le rayon de protection XPL est supérieur au seuil d'alerte J et l'erreur estimée de localisation XNSE est inférieure au niveau d'exigence d'erreur estimée K. Si une forte proportion des échantillons est positionnée dans cette catégorie, alors le système de navigation ne peut plus être utilisé car le rayon de protection XPL est supérieur au seuil d'alerte J alors que l'erreur de localisation XNSE respecte le niveau d'exigence K.

Le procédé de vérification des performances en précision est mis en oeuvre par un système comportant les moyens de mesure de l'erreur de localisation en position et les moyens de calcul du rayon de protection. Ce système est particulièrement dédié à la maintenance d'un système de navigation satellitaire et fait partie des systèmes des stations sol. La surveillance et l'analyse du comportement du système en performance de précision est facilitée par l'affichage des catégories d'échantillons 1 à 5 dans un diagramme et la proportion d'échantillons d'un relevé de mesure dans chacune des dites catégories. Des moyens d'alertes et de comparaison des proportions d'échantillon dans chacune des catégories et de préférence dans la catégorie 1 permet de certifier le respect ou non de la précision quelle que soit la condition de DOP. Ainsi, il n'est pas nécessaire d'observer toutes les conditions de DOP. Selon les proportions d'échantillons dans les différentes catégories, des moyens d'affichage présentent les échantillons avec des codes couleurs représentatifs du comportement et des performances du système de navigation par satellite.

L'invention s'applique à un système de maintenance de systèmes de navigation par satellite et plus précisément aux outils de suivi de la performance des systèmes de navigation par satellite. L'invention s'applique à tous les systèmes de positionnement par satellite, on peut citer par exemple le système américain GPS ("Global Positioning System" en langage anglo-saxon) ou le futur système européen GALILEO, ainsi que les systèmes d'augmentation de performance (EGNOS pour « European Geostationary Navigation Overlay Service»).

## Revendications

1. Procédé de vérification de la performance de précision en localisation d'un système de navigation par satellite comprenant un segment spatial émettant des signaux de radiolocalisation vers un segment récepteur, **caractérisé en ce qu'**il comporte les étapes suivantes :
- Une étape préalable de mesure de l'erreur estimée de localisation d'un récepteur du système pour une pluralité d'échantillons et de calcul du seuil d'erreur maximum de localisation, appelé rayon de protection, pouvant être garanti par le système pour les dits échantillons, l'erreur estimée et le rayon de protection étant définis dans une dimension d'un repère de position,
- Une étape de calcul d'une première proportion (1) d'échantillons vérifiant les conditions suivantes :
i. le rayon de protection (XPL) est inférieur à un seuil d'alerte (J),
ii. le quotient du rayon de protection et de l'erreur estimée de localisation (XPL/XNSE) est supérieur à un quotient de sécurité (J/K), le quotient de sécurité étant le rapport entre le seuil d'alerte (J) et un niveau d'exigence d'erreur estimée (K),
- Une étape de calcul d'une seconde proportion (2) d'échantillons vérifiant les conditions suivantes :
i. le rayon de protection (XPL) est inférieur au seuil d'alerte (J),
ii. le quotient du rayon de protection et de l'erreur estimée de localisation (XPL/XNSE) est inférieur au quotient de sécurité (J/K),
iii. l'erreur estimée de localisation (XNSE) est inférieure au niveau d'exigence d'erreur estimée (K),
- Une étape de contrôle de comparaison de la première et de la seconde proportion d'échantillons (1, 2) avec une proportion d'exigence pour vérifier la performance en précision du système de navigation par satellite.

2. Procédé selon la revendication 1, **caractérisé en ce qu'**il comporte également une étape de calcul d'une troisième proportion (3) d'échantillons vérifiant les conditions suivantes :
i. Le rayon de protection (XPL) est inférieur au seuil d'alerte (J),
ii. le quotient du rayon de protection et de l'erreur estimée de localisation (XPL/XNSE) est inférieur au quotient de sécurité (J/K),
iii. l'erreur estimée de localisation (XNSE) est supérieure au niveau d'exigence d'erreur estimée (K),

3. Procédé selon l'une quelconque des revendications précédentes, **caractérisé en ce qu'**il comporte également une étape de calcul d'une quatrième proportion (4) d'échantillons vérifiant les conditions suivantes :
i. Le rayon de protection (XPL) est supérieur au seuil d'alerte (J),
ii. L'erreur estimée de localisation (XNSE) est supérieure au niveau d'exigence d'erreur estimée (K),

4. Procédé selon l'une quelconque des revendications précédentes, **caractérisé en ce qu'**il comporte également une étape de calcul d'une cinquième proportion (5) d'échantillons vérifiant les conditions suivantes :
i. Le rayon de protection (XPL) est supérieur au seuil d'alerte (J),
ii. L'erreur estimée de localisation (XNSE) est inférieure au niveau d'exigence d'erreur estimée (K),

5. Procédé selon l'une quelconque des revendications précédentes, **caractérisé en ce que** les proportions d'échantillons (1-5) sont calculées pour au moins deux niveaux d'exigence d'erreur estimée de localisation.

6. Procédé selon l'une quelconque des revendications précédentes, **caractérisé en ce que** les proportions d'échantillons (1-5) sont calculées pour au moins deux seuils d'alerte.

7. Procédé selon la revendication 1, **caractérisé en ce que**, lorsque la première proportion (1) d'échantillons est supérieure à une proportion d'exigence devant être garanti par un service de navigation à un utilisateur, on certifie à un utilisateur que le système de navigation respecte le niveau de service lié à au niveau d'exigence d'erreur estimée de localisation.

8. Système de vérification de la performance de précision en localisation d'un système de navigation par satellite, **caractérisé en ce qu'**il est apte à mettre en oeuvre le procédé selon l'une quelconque des revendications précédentes.

9. Système selon la revendication 8, **caractérisé en ce qu'**il comporte des moyens d'affichage pour représenter dans un diagramme des échantillons de localisation d'un récepteur d'un système de navigation par satellite, le dit diagramme représentant :
- Sur un premier axe (10) le quotient du rayon de protection (XPL) et de l'erreur estimée de localisation (XNSE) défini dans une dimension d'un repère de position,
- Sur un second axe (11) le rayon de protection (XPL),
- Une première droite (13) représentant l'erreur estimée de localisation pour un niveau d'exigence (K) fixe de l'erreur estimée de localisation (XNSE),
- Une seconde droite (12) représentant un seuil d'alerte (J) du rayon de protection (XPL).

10. Système selon la revendication 9, **caractérisé en ce que** les échantillons sont affichés dans le diagramme selon un code de représentation dépendant de la première et de la seconde proportion (1-2) d'échantillons.

## Claims

1. A method for verifying the localisation precision performance of a satellite navigation system comprising a space segment emitting radio localisation signals towards a receiving segment, **characterised in that** it comprises the following steps:
- a prior step of measuring the estimated localisation error of a receiver of the system for a plurality of samples and of calculating the maximum localisation error threshold, referred to as the protection radius, that can be guaranteed by the system for said samples, the estimated error and the protection radius being defined in a dimension of a position reference;
- a step of calculating a first proportion (1) of samples verifying the following conditions:
i. the protection radius (XPL) is less than an alert threshold (J);
ii. the quotient of the protection radius and the estimated localisation error (XPL/XNSE) is greater than a safety quotient (J/K), the safety quotient being the ratio between the alert threshold (J) and a level of requirement of the estimated error (K);
- a step of calculating a second proportion (2) of samples verifying the following conditions:
i. the protection radius (XPL) is less than the alert threshold (J);
ii. the quotient of the protection radius and the estimated localisation error (XPL/XNSE) is less than the safety quotient (J/K);
iii. the estimated localisation error (XNSE) is less than the level of requirement of the estimated error (K);
- a step of checking for comparing the first and the second proportion of samples (1, 2) with a requirement proportion for verifying the precision performance of the satellite navigation system.

2. The method according to claim 1, **characterised in that** it further comprises a step of calculating a third proportion (3) of samples verifying the following conditions:
i. the protection radius (XPL) is less than the alert threshold (J);
ii. the quotient of the protection radius and the estimated localisation error (XPL/XNSE) is less than the safety quotient (J/K);
iii. the estimated localisation error (XNSE) is greater than the level of requirement of the estimated error (K).

3. The method according to any one of the preceding claims, **characterised in that** it further comprises a step of calculating a fourth proportion (4) of samples verifying the following conditions:
i. the protection radius (XPL) is greater than the alert threshold (J);
ii. the estimated localisation error (XNSE) is greater than the level of requirement of the estimated error (K).

4. The method according to any one of the preceding claims, **characterised in that** it further comprises a step of calculating a fifth proportion (5) of samples verifying the following conditions:
i. the protection radius (XPL) is greater than the alert threshold (J);
ii. the estimated localisation error (XNSE) is less than the level of requirement of the estimated error (K).

5. The method according to any one of the preceding claims, **characterised in that** the proportions of samples (1-5) are calculated for at least two levels of requirement of estimated localisation error.

6. The method according to any one of the preceding claims, **characterised in that** the proportions of samples (1-5) are calculated for at least two alert thresholds.

7. The method according to claim 1, **characterised in that**, when the first proportion (1) of samples is greater than a requirement proportion that must be guaranteed by a navigation service to a user, a user is assured that the navigation system complies with the level of service that is associated with the level of requirement of estimated localisation error.

8. A system for verifying the localisation precision performance of a satellite navigation system, **characterised in that** it is able to implement the method according to any one of the preceding claims.

9. The system according to claim 8, **characterised in that** it comprises display means for representing the localisation samples of a receiver of a satellite navigation system in a diagram, said diagram showing:
- on a first axis (10), the quotient of the protection radius (XPL) and the estimated localisation error (XNSE) defined in a dimension of a position reference;
- on a second axis (11), the protection radius (XPL);
- a first straight line (13) representing the estimated localisation error for a fixed level of requirement (K) of the estimated localisation error (XNSE);
- a second straight line (12) representing an alert threshold (J) of the protection radius (XPL).

10. The system according to claim 9, **characterised in that** the samples are displayed in the diagram according to a representation code that depends on the first and on the second proportion (1-2) of samples.

## Patentansprüche

1. Prüfungsverfahren der Lokalisations-Präzisionsleistung eines satellitengesteuerten Navigationssystems, das ein Raumsegment umfasst, das Funklokalisierungssignale an ein Empfangssegment sendet, **dadurch gekennzeichnet, dass** es die folgenden Schritte umfasst:
- einen vorhergehenden Messschritt des geschätzten Lokalisierungsfehlers eines Empfängers des Systems für eine Vielzahl von Stichproben und der Berechnung der maximalen Lokalisierungsfehlerschwelle, Schutzradius genannt, der von dem System für die Stichproben garantiert werden kann, wobei der geschätzte Fehler und der Schutzradius in einer Dimension eines Positionspunkts bestimmt sind,
- einen Berechnungsschritt eines ersten Stichprobenanteils (1) zur Überprüfung der folgenden Bedingungen:
i. der Schutzradius (XPL) ist kleiner als eine Warnstufe (J),
ii. der Quotient des Schutzradius und des geschätzten Lokalisierungsfehlers (XPL/XNSE) ist größer als ein Sicherheitsquotient (J/K), wobei der Sicherheitsquotient das Verhältnis zwischen der Warnstufe (J) und einem Anforderungsniveau des geschätzten Fehlers (K) ist,
- einen Berechnungsschritt eines zweiten Stichprobenanteils (2) zur Überprüfung der folgenden Bedingungen:
i. der Schutzradius (XPL) ist kleiner als die Warnstufe (J),
ii. der Quotient des Schutzradius und des geschätzten Lokalisierungsfehlers (XPL/XNSE) ist kleiner als der Sicherheitsquotient (J/K),
iii. der geschätzte Lokalisierungsfehler (XNSE) ist kleiner als das Anforderungsniveau des geschätzten Fehlers (K),
- einen vergleichenden Kontrollschritt des ersten und des zweiten Stichprobenanteils (1, 2) mit einem Anforderungsanteil, um die Präzisionsleistung des satellitengestützten Navigationssystems zu überprüfen.

2. Verfahren nach Anspruch 1, **dadurch gekennzeichnet, dass** es ebenfalls einen Schritt der Berechnung eines dritten Stichprobenanteils (3) aufweist, bei dem die folgenden Bedingungen überprüft werden:
i. der Schutzradius (XPL) ist kleiner als die Warnstufe (J),
ii. der Quotient des Schutzradius und des geschätzten Lokalisierungsfehlers (XPL/XNSE) ist kleiner als der Sicherheitsquotient (J/K),
iii. der geschätzte Lokalisierungsfehler (XNSE) ist größer als das Anforderungsniveau des geschätzten Fehlers (K).

3. Verfahren nach einem der vorangehenden Ansprüche, **dadurch gekennzeichnet, dass** es ebenfalls einen Schritt der Berechnung eines vierten Stichprobenanteils (4) aufweist, bei dem die folgenden Bedingungen überprüft werden:
i. der Schutzradius (XPL) ist größer als die Warnstufe (J),
ii. der geschätzte Lokalisierungsfehler (XNSE) ist größer als das Anforderungsniveau des geschätzten Fehlers (K).

4. Verfahren nach einem der vorangehenden Ansprüche, **dadurch gekennzeichnet, dass** es ebenfalls einen Schritt der Berechnung eines fünften Stichprobenanteils (5) aufweist, bei dem die folgenden Bedingungen überprüft werden:
i. der Schutzradius (XPL) ist größer als die Warnstufe (J),
ii. der geschätzte Lokalisierungsfehler (XNSE) ist kleiner als das Anforderungsniveau des geschätzten Fehlers (K).

5. Verfahren nach einem der vorangehenden Ansprüche, **dadurch gekennzeichnet, dass** die Stichprobenanteile (1-5) für mindestens zwei Anforderungsniveaus des geschätzten Lokalisierungsfehlers berechnet werden.

6. Verfahren nach einem der vorangehenden Ansprüche, **dadurch gekennzeichnet, dass** die Stichprobenanteile (1-5) für mindestens zwei Warnstufen berechnet werden.

7. Verfahren nach Anspruch 1, **dadurch gekennzeichnet, dass**, wenn der erste Stichprobenanteil (1) größer ist als ein Anforderungsanteil, der einem Benutzer von einem Navigationsservice garantiert werden muss, einem Benutzer zertifiziert wird, dass das Navigationssystem das Serviceniveau, das mit dem Anforderungsniveau des geschätzten Lokalisierungsfehlers verbunden ist, respektiert.

8. System zur Überprüfung der Lokalisations-Präzisionsleistung eines satellitengestützten Navigationssystems, **dadurch gekennzeichnet, dass** es imstande ist, das Verfahren nach einem der vorangehenden Ansprüche umzusetzen.

9. System nach Anspruch 8, **dadurch gekennzeichnet, dass** es Anzeigemittel aufweist, um in einem Diagramm Lokalisierungsstichproben eines Empfängers eines satellitengestützten Navigationssystems darzustellen, wobei das Diagramm darstellt:
- auf einer ersten Achse (10) den Quotienten des Schutzradius (XPL) und des geschätzten Lokalisierungsfehlers (XNSE), definiert in einer Dimension eines Positionspunkts,
- auf einer zweiten Achse (11) den Schutzradius (XPL),
- eine erste Gerade (13), die den geschätzten Lokalisierungsfehler für ein feststehendes Anforderungsniveau (K) des geschätzten Lokalisierungsfehlers (XNSE) darstellt,
- eine zweite Gerade (12), die eine Warnstufe (J) des Schutzradius (XPL) darstellt.

10. System nach Anspruch 9, **dadurch gekennzeichnet, dass** die Stichproben im Diagramm gemäß einem Darstellungscode angezeigt sind, der vom ersten und vom zweiten Stichprobenanteil (1-2) abhängt.
